# EUROPÄISCHE PATENTSCHRIFT

(11) **EP 2 316 673 B1**
(45) Veröffentlichungstag und Bekanntmachung des Hinweises auf die Patenterteilung: **26.12.2012**
(21) Anmeldenummer: 10013977.3
(22) Anmeldetag: 26.10.2010
(51) Int. Cl.: B60H 1/00

(54) **Verbindungseinrichtung für eine Anhängekupplung oder einen Lastenträger**
Connection device for a trailer coupling or a load bearer
Dispositif de liaison pour un attelage ou un support de charge

(30) Priorität: 03.11.2009 DE 202009014826 U
(43) Veröffentlichungstag der Anmeldung: 04.05.2011
(73) Patentinhaber: WESTFALIA - Automotive GmbH, 33378 Rheda-Wiedenbrück (DE)
(72) Erfinder: Domke, Friedrich, 33442 Herzebrock-Clarholz (DE)
(74) Vertreter: Bregenzer, Michael

(56) Entgegenhaltungen:
- EP-A1- 1 475 253
- EP-A1- 1 985 473
- DE-A1- 19 701 273
- DE-B- 1 116 067
- DE-U1- 8 423 990
- US-A- 2 549 178

## Beschreibung

Die Erfindung betrifft eine Verbindungseinrichtung zur Verbindung eines Bolzenbauteils mit einem Aufnahmebauteil einer Anhängekupplung oder eines Lastenträgers eines Kraftfahrzeugs gemäß dem Oberbegriff des Anspruchs 1.

Eine derartige Verbindungseinrichtung geht aus DE 84 23 990 U1 hervor.

Eine Verbindungseinrichtung geht beispielsweise aus DE 197 01 273 A1 hervor. Eine Verriegelungseinrichtung der aus dieser Druckschrift hervorgehenden Anhängekupplung hat einen Sperrbolzen, der in einem Führungskanal innerhalb eines Steckendes der Anhängekupplung linear verschiebbar ist und durch eine Feder in eine Sperrstellung belastet ist. In der Sperrstellung verdrängt ein Sperrbolzenkopf Verriegelungskugeln nach radial außen, so dass ein Kupplungsarm der Anhängekupplung in der fahrzeugfest angeordneten Halterung verriegelt ist. Der Sperrbolzenkopf bildet ein Aufnahmebauteil für ein stangenartiges Bolzenbauteil. Ein Stift durchdringt miteinander fluchtende Bohrungen einerseits am Aufnahmebauteil bzw. Sperrbolzenkopf und andererseits am stangenartigen Bolzenbauteil, so dass eine zugfeste Verbindung gegeben ist. Für eine solche Verstiftung ist es wesentlich, dass das durch den Sperrbolzenkopf gebildete Aufnahmebauteil und die in diesen Sperrbolzenkopf eingesteckte Stange winkelrichtig zueinander stehen, so dass die Aufnahmen für den Querstift, mithin also das Verbindungselement, miteinander fluchten. Ansonsten wäre dieser nicht in die beiden Bauteile einbringbar.

Auch bei einer aus EP 1 475 253 A1 bekannten Anhängekupplung ist das Verriegelungsprinzip mittels Kugeln, die durch einen Sperrbolzen nach radial außen in eine Sperrstellung verdrängt werden, realisiert. Auch dort stellt sich das Problem, dass an einem ein Aufnahmebauteil bildenden Steckkopf, dem Sperrbolzenkopf, ein Bolzenbauteil befestigt werden muss, das seinerseits mit einem Bowdenzug betätigbar ist. Das Bolzenbauteil ist in den Verdrängerkopf eingeschraubt. Das Einbringen der Schraubgewinde in die beiden Bauteile ist aufwendig. Der Verdrängerkopf ist gehärtet, wobei das Gewinde beim Härten durch die Aufnahme von Kohlenstoff verengt und eventuell so seine Gängigkeit verliert.

Auch das Einbringen der Bohrungen für einen Verbindungssplint, wie bei einer Anhängekupplung in der Art von DE 197 012 273 A1 üblich, sollte erst nach Aufkohlen für das dem Härten des Verdrängerkopfes erfolgen, damit der Bohrungsdurchmesser für den Splint passt.

In diesem Zusammenhang ist noch nachzutragen, dass lediglich der Verdrängerkopf gehärtet sein sollte, während das Bolzenbauteil in der Regel aus weicherem Material besteht, so dass die zweiteilige Bauweise aus Bolzenbauteil und Aufnahmebauteil sinnvoll ist.

Eine weitere Problematik ergibt sich dadurch, dass die durch den Verdrängerkopf betätigten Verdrängerelemente oder Kugeln auf den Verdrängerkopf beim Fahrbetrieb des Kraftfahrzeuges zurückwirken, so dass eine Drehbelastung auf beispielsweise dem vorgenannten Verbindungssplint wirkt, was zu Beschädigungen führen kann. Auch eine Verschraubung sollte möglichst nicht drehbelastet sein, so dass sie sich nicht lösen kann.

Es ist daher die Aufgabe der vorliegenden Erfindung, eine Verbindungseinrichtung zur Verbindung eines Bolzenbauteils mit einem Aufnahmebauteil einer Anhängekupplung oder eines Lastenträgers auf dem Gebiet der Kraftfahrzeuge bereit zu stellen, die einfach montierbar ist und zugleich eine gute Zugfestigkeit zwischen den beiden Bauteilen gewährleistet.

Zur Lösung der Aufgabe ist eine Verbindungseinrichtung gemäß der technischen Lehre des Anspruchs 1 vorgesehen.

Die erfindungsgemäße Verbindungseinrichtung ermöglicht eine sehr einfache, jedoch wirkungsvolle Steckmontage des Bolzenbauteils am Aufnahmebauteil bzw. umgekehrt. Der Sprengring hat ein radiales Spiel bzw. gewisse radiale Toleranzen und passt sich durch seine federnde Eigenschaft dem vorhandenen Raum an, so dass der zugfeste Halt ohne genaue Passungen möglich ist. Eine Nachbearbeitung ist nicht erforderlich. Ferner können die erforderlichen Bauteile vor ihrer Montage komplett vorgefertigt werden. Beispielsweise können die Aufnahme im Aufnahmebauteil und im Bolzenbauteil bereits vor dem Härten vorgefertigt werden. Dennoch passt der Sprengring in die entsprechende Aufnahme. Weiterhin muss in vielen Fällen nicht auf eine winkelrichtige Montage geachtet werden. Vielmehr können das Aufnahmebauteil und das Bolzenbauteil in verschiedenen Drehstellungen bezüglich der Steckachse zueinander orientiert sein, wenn sie aneinander angesteckt werden.

An dieser Stelle sei noch bemerkt, dass eine Steckachse beim Einstecken der beiden Bauteile auch einen Krümmungsverlauf aufweisen kann, in der Regel jedoch eine lineare bzw. geradlinige Steckachse sein wird.

Die nachfolgenden Maßnahmen ermöglichen eine einfache, unkomplizierte Montage.

Bevorzugt ist, wenn das Bolzenbauteil eine Aufweitschräge oder einen Konus zum Aufweiten des Sprengrings beim Aufstecken auf das Bolzenbauteil aufweist. Eine zusätzliche Montagehilfe ist dann nicht erforderlich. Zwischen der Aufweitschräge oder dem Konus einerseits sowie der Aufnahmebauteil-Aufnahme oder -ringnut ist zweckmäßigerweise ein Abschnitt ohne Neigung oder mit einer Neigung zur Aufnahmebauteil-Aufnahme hin vorgesehen. Diese Maßnahme trägt dazu bei, dass der Sprengring sicher in der Aufnahmebauteil-Aufnahme gehalten wird.

Auf Seiten des Aufnahmebauteils ist eine Schrägflächenanordnung vorgesehen, die zum Komprimieren des Sprengrings in seine Spannstellung geeignet ist. Beispielsweise hat das Aufnahmebauteil eine Kompressionsschräge oder einen Kompressionskonus zum Komprimieren des Sprengrings beim Einführen in die Steckaufnahme. Die Kompressionsschräge oder der Kompressionskonus ist zwischen einer Einführöffnung der Steckaufnahme und der Ringnut angeordnet und im Sinne eines Verengens zur Ringnut hin geneigt.

Die Kompressionsschräge hat zweckmäßigerweise eine geringere Schrägneigung als die Aufweitschräge. Somit sind verhältnismäßig geringe Kräfte beim Einführen des Bolzenbauteils in die Steckaufnahme nötig.

Das Bolzenbauteil kann insgesamt stangenartig sein oder auch durch einen Bolzenvorsprung gebildet sein, der an einem anderen Bauteil vorgesehen ist.

Die Montage mit Hilfe der erfindungsgemäßen Verbindungseinrichtung gestaltet sich wie folgt:

Am Aufnahmebauteil sind die Steckaufnahmen zum Einstecken des Steckkopf des Bolzenbauteils entlang einer Steckachse sowie weiterhin die Aufnahmebauteil-Aufnahme für das Verbindungselement vorzusehen.

Am Bolzenbauteil wird die Bolzenbauteil-Aufnahme für das Verbindungselement vorgesehen.

Dann wird der Sprengring entweder in die Aufnahmebauteil-Aufnahme eingebracht oder in die Bolzenbauteil-Aufnahme.

Sodann wird das Bolzenbauteil in die Steckaufnahme eingesteckt.

Wenn der Sprengring in der Bolzenbauteil-Aufnahme vormontiert ist, wird er beim Einstecken in die Steckaufnahme des Aufnahmteils komprimiert, so dass die Spannstellung einer Kompressionsstellung entspricht. Dann steht der Sprengring nicht oder nur unwesentlich vor die Bolzenbauteil-Aufnahme vor, so dass das weitere Einstecken in die Steckaufnahme möglich ist. Wenn die Aufnahmebauteil-Aufnahme mit dem Bolzenbauteil-Aufnahme fluchtet, kann sich der Sprengring wieder entspannen und seine Befestigungsstellung einnehmen.

Es ist aber auch möglich, dass der Sprengring in der Aufnahmebauteil-Aufnahme vormontiert ist. Diese hat eine ausreichende Tiefe derart, dass der Sprengring von dem Bolzenbauteil nach radial außen in die Aufnahmebauteil-Aufnahme verdrängbar ist, so dass genügend Platz ist, um das Bolzenbauteil in die Steckaufnahme einzustecken. Wenn dann Bolzenbauteil-Aufnahme mit der Aufnahmebauteil-Aufnahme fluchtet, kann sich der Sprengring wieder entspannen und seine Befestigungsstellung einnehmen. Der Sprengring "schnappt" sozusagen in die Befestigungsstellung bzw. in die Bolzenbauteil-Aufnahme.

Bei beiden vorgenannten Montagearten, die bei geeigneter Tiefe der Bolzenbauteil-Aufnahme und der Aufnahmebauteil-Aufnahme sogar wahlweise mit denselben Bauteilen realisierbar sind, befindet sich der Sprengring am Ende der Montage in seiner Befestigungsstellung, in der er teilweise in die Bolzenbauteil-Aufnahme und teilweise in die Aufnahmebauteil-Aufnahme eingreift und somit das Aufnahmebauteil mit dem Bolzenbauteil bezüglich der Steckachse zugfest hält.

Ein zugfester Halt kann auch ein Halt mit einem Spiel bezüglich der Steckachse sein. So ist es beispielsweise möglich, das eine der beiden Ringnuten eine größere Breite aufweist als der Sprengring "dick" ist. Bevorzugt ist jedoch eine spielfreie oder spielarme Befestigung, bei der mindestens eine, vorzugsweise beide der Ringnuten bezüglich der Steckachse eine Breite aufweist, die einer Breite des Sprengringes entspricht. In wenigstens einer der Ringnuten hält der Sprengring dann im Wesentlichen spielfrei. An dieser Stelle ist allerdings zu bemerken, dass ein gewisses Spiel notwendig ist, damit der Sprengring zwischen der Spannstellung und der Befestigungsstellung beweglich bleibt, das heißt dass er beispielsweise in einer Kompressionsstellung in die Ringnut des Bolzenbauteils hinein verdrängt ist oder in einer Aufweitstellung in die Ringnut des Aufnahmebauteils.

Die Aufnahmebauteil-Aufnahme weist zweckmäßigerweise einen geringeren Durchmesser auf als der Sprengring in seiner vollständig entspannten Stellung, das heißt wenn der Sprengring unbelastet ist. Dadurch wirkt die Aufnahmebauteil-Aufnahme von radial außen auf den Sprengring, so dass dieser vor die Aufnahmebauteil-Aufnahme teilweise vorsteht und in die Ringnut des Bolzenbauteils eingreift. Es ist allerdings auch denkbar, dass der Sprengring in seiner Befestigungsstellung vollständig entspannt ist.

Wenn die Aufnahmebauteil-Ringnut den Sprengring in der Befestigungsstellung nach radial innen belastet, liegt dieser zweckmäßigerweise an einem Boden der Aufnahmebauteil-Aufnahme an.

Der Begriff "Schrägneigung" ist jeweils als eine Schrägneigung bezüglich der Steckachse zu verstehen.

Eingangs wurde bereits erwähnt, dass eine Drehmomentbelastung bei einer Versplintung von Aufnahmebauteil und Bolzenbauteil problematisch ist. Die erfindungsgemäße Verbindung ermöglicht eine recht einfache Verdrehbarkeit der beiden Bauteile relativ zueinander. So sind in einer bevorzugten Ausführungsform der Erfindung das Bolzenbauteil und das Aufnahmebauteil durch das Verbindungselement relativ zueinander verdrehbar. Diese relative Verdrehbarkeit kann sich über einen Teilumdrehungsbereich oder über die vollständige Umdrehung erstrecken. Mithin kann also eine teilweise Drehbeweglichkeit gewährleistet sein.

Wie vorher bereits erwähnt, kann auch bezüglich der Steckachse ein Spiel vorhanden sein, so dass das Bolzenbauteil und das Aufnahmebauteil relativ zueinander mit einem gewissen Spiel verschieblich, jedoch in einer vollständig ausgezogenen Stellung zugfest miteinander verbunden sind, in Umdrehungsrichtung bezüglich der Steckachse eine zumindest Drehbeweglichkeit haben.

Somit können beispielsweise vom Steckkopf auf das Bolzenbauteil oder umgekehrt wirkende Belastungen vermieden oder vermindert werden. Auch die Montage ist deutlich vereinfacht, wenn eine winkelgerechte Lage des Bolzenbauteils zum Aufnahmebauteil beim Einstecken des Bolzenbauteils in die Steckaufnahme nicht wesentlich ist.

Es versteht sich, dass aber auch eine zumindest teilweise Drehfestigkeit oder ein Drehanschlag sinnvoll sein kann. So weist die Verbindungseinrichtung zweckmäßigerweise Drehanschläge zum verdrehsicheren Befestigen des Bolzenbauteils am Aufnahmebauteil auf. Die Verdrehsicherheit kann eine vollständige Drehmitnahme umfassen, das heißt dass keine Verdrehbarkeit des Bolzenbauteils relativ zum Aufnahmebauteil vorhanden ist. Es ist aber auch möglich, dass die Drehanschläge ein Spiel in Umfangsrichtung bzw. Drehrichtung bezüglich der Steckachse zulassen.

Als Drehanschläge können beispielsweise Stirnseitenflächen an den freien Enden des Sprengrings dienen, die mit quer zur Steckachse verlaufenden Anschlagflächen an der Bolzenbauteil-Aufnahme und/oder der Aufnahmebauteil-Aufnahme zusammenwirken. Somit kann sich also der Sprengring nicht bezüglich der jeweiligen Aufnahme verdrehen. Wenn dann an der jeweiligen anderen Aufnahme ebenfalls Anschlagflächen vorhanden sind, sind das Bolzenbauteil und das Aufnahmebauteil drehsicher miteinander verbunden.

Aber auch abseits des Verbindungselements können Drehanschläge vorgesehen sein. Beispielsweise könnte man an dem Bolzenbauteil und dem Aufnahmebauteil einen oder mehrere Drehmitnahmevorsprünge vorsehen, die zum Eingriff in eine Drehmitnahmeaufnahme am jeweils anderen Bauteil ausgestaltet ist.

Die Bolzenbauteil- oder die Aufnahmebauteil-Aufnahme sind zweckmäßigerweise teilringförmig oder vollständig ringförmig.

Das Bolzenbauteil und die Steckaufnahme sind zwar in einer bevorzugten Ausführungsform zumindest im Wesentlichen kreisrund. Es versteht sich, dass auch polygonale Konturen prinzipiell möglich sind. Weiterhin ist auch der Sprengring in einer vorteilhaften Ausgestaltung ein an sich üblicher Sprengring, das heißt ein Sprengring mit im Wesentlichen kreisrunder Gestalt. Der Sprengring kann aber auch eine andere Außenumfangskontur aufweisen, beispielsweise eine im Wesentlichen rechteckige oder quadratische. Dazu passend können auch die Bolzenbauteil- oder die Aufnahmebauteil-Aufnahme polygonal sein.

Die Verbindungseinrichtung ist besonders bevorzugt auf dem Gebiet von Anhängekupplungen oder Lastenträgern einsetzbar.

Das Bolzenbauteil und das Aufnahmebauteil bildet zweckmäßigerweise Bestandteile einer Verriegelungsanordnung zur Verriegelung eines Kupplungsarms einer Anhängekupplung bezüglich eines fahrzeugfesten Halters für den Kupplungsarm. Das Bolzenbauteil und das Aufnahmebauteil können auch Bestandteile einer Betätigungseinrichtung bilden, beispielsweise zur Betätigung der vorgenannten Verriegelungsanordnung.

Das Bolzenbauteil ist zweckmäßigerweise an einem freien Ende eines Stangenteils und das Aufnahmebauteil an einem zum Verdrängen von mindestens einem Verriegelungselement vorgesehenen Verdrängerkopf eines Verriegelungsbolzens vorgesehen. Das Verriegelungselement ist bevorzugt eine Kugel. Der Verdrängerkopf ist zweckmäßigerweise gehärtet. Der Verdrängerkopf ist in einer bevorzugten Ausführungsform der Erfindung durch eine Feder oder eine Federanordnung in seine Verdrängerstellung oder Sperrstellung beaufschlagt, in der er das oder die Verriegelungselemente in eine Verriegelungsstellung verdrängt, in der die Verriegelungsanordnung den Kupplungsarm am fahrzeugseitigen Halter insbesondere spielfrei oder spielarm hält.

Die erfindungsgemäße Verbindungseinrichtung kann aber auch bei einer Betätigungseinrichtung verwendet werden. Beispielsweise verbindet sie dort ein Betätigungsrad, z.B. ein Handrad, ein Zahnrad oder dergleichen, mit einem Bolzenbauteil, z.B. einer Drehwelle.

Weiterhin können auch Gestellteile eines Lastenträgers erfindungsgemäß verbunden werden. Z.B. kann eine Querstrebe in eine Steckaufnahme eines Längsträgers eines Gestells eingesteckt werden und dort erfindungsgemäß durch einen Sprengring gehalten werden.

Nachfolgend werden Ausführungsbeispiele der Erfindung anhand der Zeichnung erläutert. Es zeigen:
- Figur 1: eine perspektivische Schrägansicht einer Anhänge- kupplung, deren Kupplungsarm an einen fahrzeugfes- ten Halter ansteckbar ist, wobei bei dem Kupplungs- arm eine erfindungsgemäße Verbindungseinrichtung verwendet ist,
- Figur 2: eine Querschnittsansicht der Anhängekupplung gemäß Figur 1 etwa entlang einer Schnittlinie A-A,
- Figur 3: eine Seitenansicht einer weiteren Anhängekupplung mit einem Kupplungsarm, der bezüglich des fahrzeug- festen Halters schwenkbar ist und eine mit einer erfindungsgemäßen Verbindungseinrichtung ausgestat- tete Verriegelungsanordnung aufweist,
- Figur 4: eine Schnittansicht der Anhängekupplung gemäß Figur 3 etwa entlang einer Schnittlinie B-B,
- Figur 5: eine Schnittansicht einer Betätigungseinrichtung der Anhängekupplung gemäß Figur 3, bei der zwei er- findungsgemäße Verbindungseinrichtungen vorhanden sind,
- Figuren 6a - 6c: Querschnittsansichten eines Aufnahmebauteils und eines Bolzenbauteils bei einer Montage aneinander, etwa entsprechend einem Ausschnitt C in Figur 2, jedoch schematisiert,
- Figuren 7a - 7c: Teilausschnitte D aus den Figuren 6a - 6c,
- Figuren 8a - 8c: perspektivische Schrägansichten einer Montage der in Figuren 6a - 6c im Schnitt dargestellten Kompo- nenten, und
- Figur 9: eine perspektive Schrägansicht eines weiteren Aus- führungsbeispiels der Erfindung, bei dem ein Bol- zenbauteil und ein Aufnahmebauteil verdrehsicher miteinander verbunden sind.

Bei der nachfolgenden Beschreibung sind gleiche oder gleichartige Bauteile mit denselben Bezugszeichen versehen. Zur Verdeutlichung von Unterschieden sind teilweise die Buchstaben a-d verwendet.

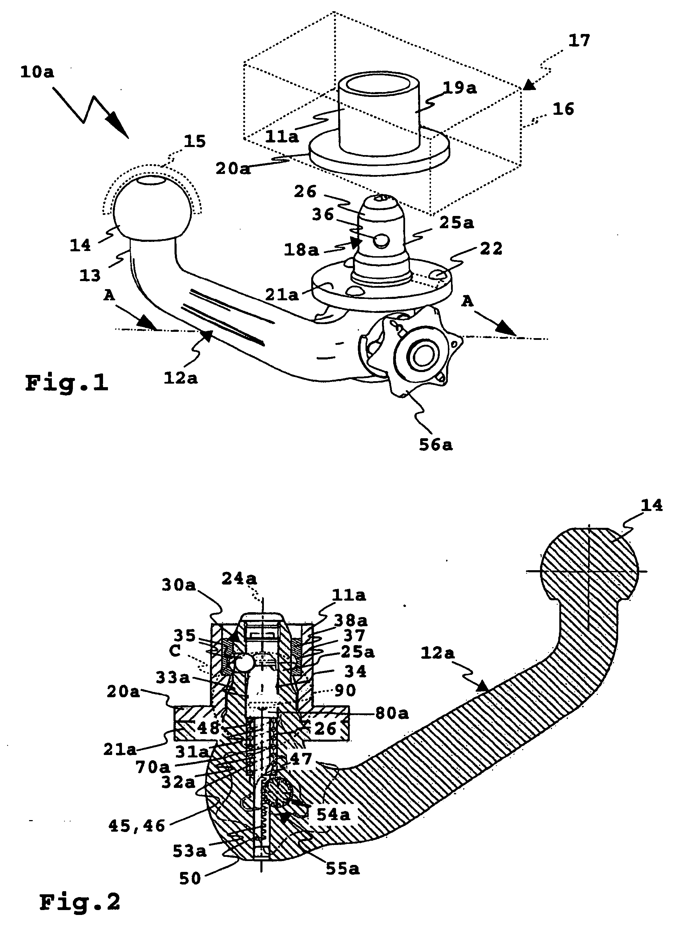

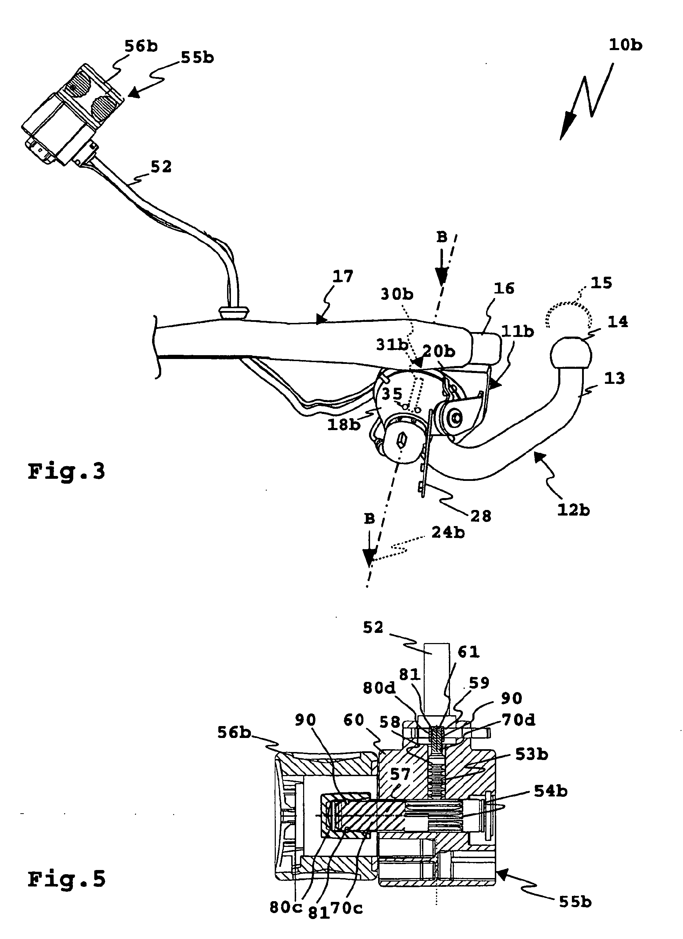

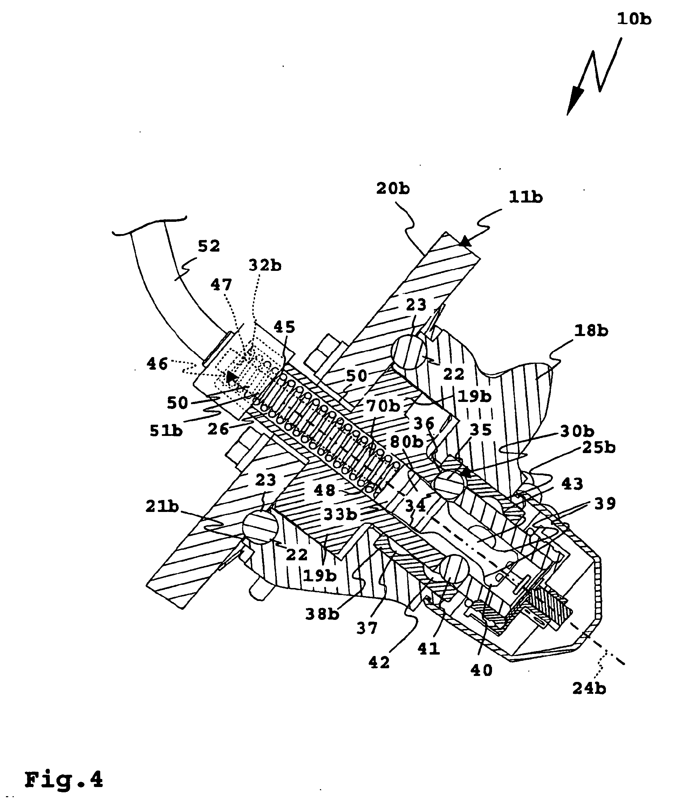

Bei den Anhängekupplungen 10a (Figuren 1, 2) und 10b (Figuren 3, 4) ist jeweils ein Fahrzeug-Halter 11a, 11b zum Halten eines Kupplungsarmes 12a, 12b vorgesehen, an dessen freien Ende 13 eine Kupplungskugel 14 zum Anhängen eines Anhängers 15 angeordnet ist. Der Fahrzeug-Halter 11a, 11b ist an einem Querträger 16 eines Kraftfahrzeuges 17 befestigbar oder befestigt.

Während die Anhängekupplung 10a eine Steck-Anhängekupplung ist, bei der der Kupplungsarm 12a an den Fahrzeug-Halter 11a ansteckbar ist, handelt es sich bei der Anhängekupplung 10b um eine Anhängekupplung, bei der der Kupplungsarm stets am Heck des Kraftfahrzeuges 17 verbleibt, dort aber beweglich gelagert ist, vorliegend drehbar (eine Verschiebelagerung oder auch eine Verschiebe-Drehlagerung sind ebenfalls möglich).

Bei der Anhängekupplung 10a ist ein Kupplungsarm-Steckabschnitt 18a des Kupplungsarmes 12a in eine Steckaufnahme 19a des Fahrzeug-Halters 11a einsteckbar entlang einer Steckachse 24a.

Bei der Anhängekupplung 10b ist ein Kupplungsarm-Lagerteil 18b an einem fahrzeugfest angeordneten Lagerkopf 19b des Fahrzeug-Halters 11b schwenkbar um eine Schiebeachse 24b gelagert.

Die beiden Fahrzeug-Halter 11a, 11b haben fahrzeugfeste Anschläge, gegen die der Kupplungsarm 12a, 12b spannbar ist. Beispielsweise ist bei den Fahrzeug-Haltern 11a, 11b jeweils eine Flanschplatte 20a, 20b vorgesehen, gegen die eine Flanschplatte 21a bzw. eine Flanschfläche 21b spannbar ist. Die Flanschplatte 21a steht nach radial außen vor den Kupplungsarm 12a vor. Die Flanschfläche 21b ist eine Stirnseitenfläche des Kupplungsarm-Lagers 18b.

Der Kupplungsarm 12a, 12b ist am Fahrzeug-Halter 11a, 11b jeweils verdrehfest anordenbar. Dazu sind beispielsweise an den Flanschplatten 20a, 20b einerseits und der Flanschplatte 21a bzw. der Flanschfläche 21b andererseits Formschlusskörper 22 sowie Formschlussaufnahmen 23 vorgesehen. Die Formschlusskörper 22 sind beispielsweise Kugeln, während die Formschlussaufnahmen 23 dazu passende Kugelkalotten sind. Es versteht sich, dass auch auf andere Weise ein Formschluss herstellbar ist, beispielsweise in der Art von Keilflächen und Keilaufnahmen, die bei einer Anhängekupplung gemäß DE 195 40 336 A1 realisiert sind, oder dergleichen.

Zur Verriegelung der Kupplungsarme 12a, 12b am Fahrzeug-Halter 11a, 11b dienen Verriegelungsanordnungen 30a, 30b mit Verriegelungsbolzen 31a, 31b. Diese sind in einem Aufnahmeraum 26 eines Steckendes 25a des Kupplungsarms 12a sowie eines Lagerrohrs 25b des Fahrzeug-Halters 11b vorgesehen. Das Lagerrohr 25b bildet eine Art Hohlwelle und somit einen Bestandteil eines Schwenklagers, mit dem das Kupplungsarm-Lagerteil 18b bezüglich des Fahrzeug-Halters 11b schwenkbar gelagert ist.

Die Verriegelungsbolzen 31a, 31b umfassen jeweils ein Stangenteil 32a, 32b, das in erfinderungsgemäßer Weise mit einem Verdrängerkopf 33a, 33b zugfest verbunden ist.

An den Umfangsseiten der Verdrängerköpfe 33a, 33b sind jeweils Verdrängerflächen 34 vorgesehen, mit denen Verriegelungselemente, vorliegend beispielsweise Kugeln (wobei auch Wälzelemente oder dergleichen denkbar sind) nach radial außen durch Kanäle 36 hindurch in Formschlussaufnahmen 37 verdrängbar sind, die am Fahrzeug-Halter 11a bzw. am Kupplungsarm-Lagerteil 18b vorgesehen sind. Die Kanäle 36 verlaufen von den jeweiligen Aufnahmeräumen 26 nach radial außen am Steckende 25a bzw. Lagerrohr 25b. Die Formschlussaufnahmen 37 sind durch Ringnuten an Ringen 38a, 38b gebildet, die ortsfest an der Steckaufnahme 19a bzw. in einem Innenraum des Kupplungsarm-Lagerteils 18b angeordnet sind.

Gegenüber der Verriegelungsanordnung 30a weist die Verriegelungsanordnung 30b noch die Besonderheit auf, dass sie Lösemittel zum Lösen der Verriegelung umfasst, ähnlich wie die Anhängekupplung EP 1 475 253 A1. Vor den Verdrängerkopf 33b steht ein Lösekopf 40 vor, an dem den Verdrängerflächen 34 zugewandt Löseflächen 39 vorhanden sind. Wenn der Verriegelungsbolzen 31b in Richtung seiner Lösestellung verstellt wird, können zum einen die Verriegelungselemente 35 radial innen durch die Kanäle 36 in Richtung des Aufnahmeraums 26 verstellt werden. Zum andern drückt die Lösefläche 39 Lösekugeln 41, mithin also Löseelemente, nach radial außen durch entsprechende Kanäle, die die den Aufnahmeraum 26 umfassende Umfangswand durchsetzen, so dass die Lösekugeln 41 schließlich in Löseaufnahmen 42 eindringen und eine Lösekraft erzeugen, die im Sinne einer Bewegung von der Flanschplatte 20b weg wirkt. Mithin wird also dadurch der Lagerkopf 19b von der Flanschplatte 20b abgehoben. Zwischen der Lösefläche 39 und den Verdrängerflächen 34 ist eine Vertiefung vorgesehen, in die die Lösekugeln 41 und die Verriegelungselemente 35 nach radial innen in Richtung des Aufnahmeraumes 26 fallen können, so dass insgesamt der Verdrängerkopf 33b eine hundeknochenartige Gestalt aufweist.

Bei der Anhängekupplung 10a ist weiterhin ein schwenkbarer Steckdosenhalter 28 vorhanden, der zwischen einer Gebrauchsstellung einer Nichtgebrauchsstellung verschwenkbar ist.

Die beiden Verriegelungsbolzen 31a, 31b werden durch eine Federanordnung 45 in ihre Verriegelungsstellung beaufschlagt. Die Federanordnungen 45 umfassen jeweils eine Feder 46, die sich einerseits an einer Boden-Stützfläche 47 und andererseits an einer Kopf-Stützfläche 48 abstützt. Die Boden-Stützflächen 47 sind durch Bodenflächen der Aufnahmeräume 26 gebildet, während die Kopf-Stützflächen 48 an den Unterseiten der Verdrängerköpfe 33a, 33b vorgesehen sind. Die Stangenteile 32a, 32b durchdringen die Federn 46.

Zum Lösen der Verriegelungsanordnungen 30a, 30b sind Betätigungseinrichtungen 55a, 55b vorgesehen. Diese wirken jeweils auf einen Betätigungsabschnitt 50 der Stangenteile 32 und ermöglichen ein Lösen der Verriegelungsanordnungen 30a, 30b entgegen der Kraft der Federn 46.

Die Betätigungseinrichtungen 55a, 55b umfassen jeweils ein Handrad 56a, 56b, das von einem Bediener ergriffen und gedreht werden kann, um auf die Betätigungsabschnitte 50 im Sinne eines Lösens zu wirken.

Das Handrad 56a ist drehfest mit einem Zahnrad 54a gekoppelt, das in eine Zahnung 53a, mithin also einem Zahnstangenabschnitt, am Betätigungsabschnitt 50 kämmt.

Die Betätigungseinrichtung 55b erlaubt eine Betätigung aus der Ferne. Das Handrad 56b ist beispielsweise an einem Gehäuse 60 vorgesehen, dass im Innenraum des Kraftfahrzeugs 17, z.B. im Gepäckraum, anordenbar ist. Zwischen dem Gehäuse 60 und dem Fahrzeug-Halter 11b verläuft ein Bowdenzug 52, der mit dem Verriegelungsbolzen 31b zugfest gekoppelt ist, beispielsweise mit einem Zugabschnitt 51 desselben fest verbunden ist.

Das Handrad 56b ist über einen Bolzen 57 mit einem Zahnrad 54b drehfest verbunden, das seinerseits mit einem Zahnstangenteil 58 eines Bowdenzug-Anschlussstücks 59 kämmt. Das Bowdenzug-Anschlussstück 59 ist mit dem Bowdenzug 52 zugfest verbunden.

Die Verriegelungsanordnungen 30a, 30b müssen verhältnismäßig große Verriegelungskräfte ausüben, um die Kupplungsarme 12a, 12b möglichst spielarm an den Fahrzeug-Haltern 11a, 11b zu halten und zu verriegeln. Beim Fahrbetrieb des Kraftfahrzeugs 17 treten nämlich verhältnismäßig große Kräfte auf, die auf den Kupplungsarm 12a, 12b wirken. Obwohl an die Verbindung der einzelnen Komponenten der Verriegelungsanordnungen 30a, 30b sowie der Betätigungseinrichtungen 55a, 55b große Anforderungen hinsichtlich der Festigkeit und auch sonstigen Belastbarkeit gestellt sind, ist deren Montage durch die nachfolgend erläuterte erfindungsgemäße Verbindungstechnik erleichtert:
Die Stangenteile 32a, 32b sowie der eine Zahnung oder ein Zahnrad 54b aufweisende Bolzen 57 und das Bowdenzug-Anschlussstück 59 bilden Bolzenbauteile 70a-70d, die jeweils einen Steckkopf 71 aufweisen, der in korrespondierende Steckaufnahmen 81 von Aufnahmebauteilen 80b-80d einsteckbar ist. Die Verdrängerköpfe 33a, 33b bilden die Aufnahmebauteile 80a, 80b. Das Aufnahmebauteil 80c wird durch das Handrad 56b gebildet. Das Aufnahmebauteil 80d durch einen Bowdenzug-Anschluss 61, der mit dem Bowdenzug-Anschlussstück 59 erfindungsgemäß zugfest verbunden ist und zudem auch mit dem Zug-/Druckseil des Bowdenzugs 52 zug- und druckfest verbunden ist. Man kann sich beispielsweise eine Konfiguration vorstellen, bei dem das Zug-/Druckseil des Bowdenzugs 52 mit dem Bowdenzug-Anschluss 61 verschweißt oder verklebt ist oder das an dem Zugseil frontseitig eine Steckaufnahme 81 vorgesehen ist.

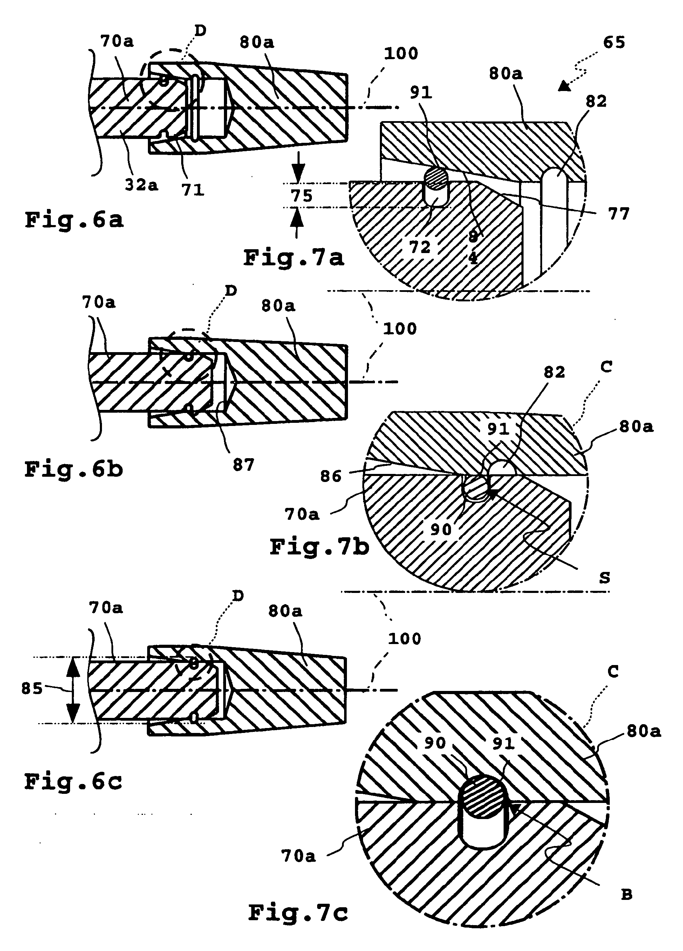

Die Verbindungen zwischen den Bolzenbauteilen 70a-70d und den Aufnahmebauteilen 80a-80d sind erfindungsgemäß hergestellt und werden nachfolgend anhand der Figuren 6a-8c exemplarisch anhand der Verbindung zwischen dem Bolzenbauteil 70a und dem Aufnahmebauteil 80a erläutert.

An dem Steckkopf 71 ist eine Bolzenbauteil-Aufnahme 72 in der Art einer Ringnut 73 vorgesehen. Korrespondierend zur Ringnut 73 und in Steckstellung des Bolzenbauteils 70a am Aufnahmebauteil 80a mit dieser fluchtend ist am Aufnahmebauteil 80a eine Aufnahmebauteil-Aufnahme 82 in Gestalt einer Ringnut 83 vorgesehen.

Eine bevorzugte Montage der in den Figuren 6a-8c dargestellten Verbindungseinrichtung 65 wird nachfolgend erläutert:
An einem freien Ende des Bolzenbauteils 70a ist ein Konus 74 vorhanden, der ein Aufspreizen des Sprengringes 91 erleichtert. Der Sprengring 91 wird also von der freien Seite des Stangenteils 32a her auf den Konus 74 aufgesteckt. Der Konus 74 stellt eine Aufweitschräge 77 dar, die zum Aufweiten des Sprengringes 91 geeignet ist. Beim Verschieben des Sprengringes 91 entlang der Steckachse 100 weitet sich also der Sprengring 91 auf, bis er in den Bereich der Ringnut 73 gelangt, so dass er aus seiner aufgeweiteten Stellung wieder zurück in eine entspannte Stellung gelangen kann. Der Sprengring 91 hat dabei einen Abstand von einem Boden der Ringnut 73, die eine geeignete Tiefe 75 dafür aufweist, siehe Figur 7a.

Sodann wird das Bolzenbauteil 70a entlang der Steckachse 100 in Richtung der Steckaufnahme 81 verschoben, das heißt in die Steckaufnahme 81 eingesteckt, siehe Figuren 6b, 7b. Dabei gleitet der Sprengring 91 an einem Kompressionskonus entlang, der sich von einer Einführöffnung der Steckaufnahme 81 in Richtung von deren Steckaufnahme-Boden 87 erstreckt. Der Kompressionskonus 84, den man auch als einen Einführkonus bezeichnen kann, weist also eine Kompressionsschräge 86 auf, die zum Komprimieren des Sprengrings 91 in eine Spannstellung S geeignet ist. Die Spannstellung S kann man in diesem Zusammenhang auch als eine Kompressionsstellung bezeichnen.

In Figur 7b ist dargestellt, dass sich zwischen der Kompressionsschräge 86 und der Aufnahmebauteil-Aufnahme 82 bzw. Ringnut 83 ein flacher Abschnitt erstreckt, das heißt ein Abschnitt, der nicht schräggeneigt ist. Wenn der Sprengring 91 beim Einstecken in die Steckaufnahme 81 an diesem nicht geneigten Abschnitt, der parallel zur Steckachse 100 verläuft, entlang vorbeigeschoben ist, wobei er durch die Ringnut 73 geführt ist, kann er sich wieder entspannen, wenn die beiden Aufnahmen 72, 82 bzw. Ringnuten 73, 83 miteinander fluchten, siehe Figuren 6c, 7c. Der Sprengring 91 entspannt sich dabei und gelangt in seiner Befestigungsstellung B, in der er sowohl in die Bolzenteil-Aufnahme 72 als auch in die Aufnahmebauteil-Aufnahme 82 eingreift. Dadurch ist das Bolzenbauteil 70a zugfest mit dem Aufnahmebauteil 80a verbunden.

Beim Ausführungsbeispiel ist die Anordnung bzw. Tiefe der Ringnuten 73, 83 so getroffen, dass die Tiefe 75 ausreicht, um den Sprengring 91 in seiner Kompressionsstellung bzw. Spannstellung S vollständig aufzunehmen. Somit steht er also nicht vor einen Außenumfang des Bolzenbauteils 70a störend vor, so dass dieses ohne ein Hindernis in die Steckaufnahme 81 eingeschoben werden kann, siehe Figuren 6b, 7b.

Ein Durchmesser 85 der Ringnut 83 bzw. Aufnahmebauteil-Aufnahme 82 ist nunmehr so getroffen, dass der Sprengring 91 sich nicht vollständig entspannen kann, sondern unter seiner eigenen Federspannung am Nutboden bzw. Boden der Aufnahme 82 anliegt, siehe Figur 7c. Somit hält also quasi die Aufnahmebauteil-Aufnahme 82 den Sprengring 91 in der Befestigungsstellung B.

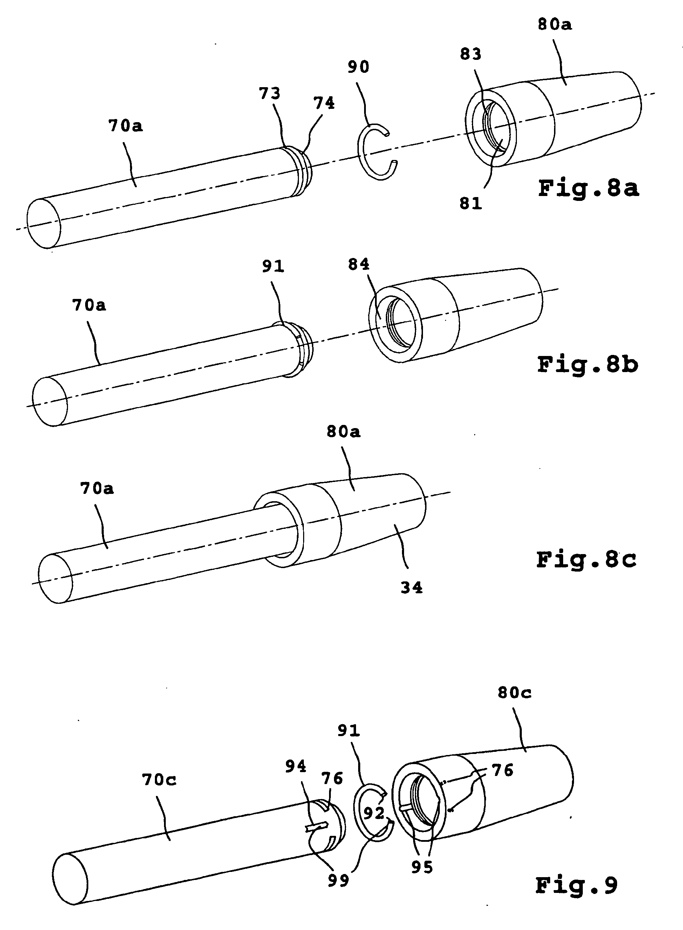

Der stirnseitige Konus 74 des Bolzenbauteils 70 sowie der Einführkonus bzw. Kompressionskonus 84 erleichtern zudem ein Einstecken des Bolzenbauteils 70a in die Steckaufnahme 81. Die Verbindungseinrichtung 65 gemäß Figuren 6a, 8c ist so ausgestaltet, dass das Bolzenbauteil 70a und das Aufnahmebauteil 80a relativ zueinander verdrehbar sind. Dadurch werden Drehmomente, die beispielsweise durch die Verriegelungselemente 35 auf die Verriegelungsbolzen 31a, 31b wirken, sozusagen unschädlich gemacht, das heißt sie wirken nicht auf das Stangenteil 32a, 32b zurück. Dies hat beispielsweise den Vorteil, dass kein Drehmoment auf die Zahnung 53a und somit das Zahnrad 54 zurückwirkt. Dadurch ist die Entriegelung der Verriegelungsanordnung 30a stets spannungsfrei. Bei der Verriegelungsanordnung 30b hat die Drehbarkeit der Verbindungseinrichtung 65 den Vorteil, dass ein Verdrillen oder eine sonstige Drehmomentbeaufschlagung des Zugseils des Bowdenzuges 52 vermieden wird, falls die Verriegelungselemente 35 auf der Verriegelungsbolzen 31b im Sinne eines Verdrehens rückwirken.

Allerdings sind auch verdrehfeste oder zumindest in einer Richtung verdrehgesicherte Verbindungen mit einer erfindungsgemäßen Verbindungseinrichtung möglich. Eine verdrehgesicherte Verbindung ist beispielsweise bei der Betätigungseinrichtung 55b zwischen einerseits den Bolzenbauteilen 70c, 70d und andererseits den Aufnahmebauteilen 80c und 80d zweckmäßig. Am Beispiel der Verbindung zwischen den Bauteilen 70c, 80c ist dies in Figur 9 dargestellt. Bei der Verbindung zwischen dem Bolzenbauteil 70d und dem Aufnahmebauteil 80d könnte allerdings auch eine Verdrehbarkeit zweckmäßig sein.

Drehanschläge 99 legen das Bolzenbauteil 70c am Aufnahmebauteil 80c drehfest fest. Die Drehanschläge 99 umfassen am Außenumfang des Bolzenbauteils 70c angeordnete Drehmitnahmevorsprünge 94, die in korrespondierende Drehmitnahmeaufnahmen 95, beispielsweise Nuten, am Innenumfang der Steckaufnahme 81 eingreifen.

Weiterhin stützen sich Stirnseitenflächen 92, die insoweit Drehanschläge 99 bilden, an Anschlagflächen 76 ab, die im Bereich der Bolzenbauteil-Aufnahme 72 vorgesehen sind. Die Anschlagflächen 76 haben einen Umfangsabstand, der dem Umfangsabstand der Stirnseitenflächen 92 entspricht. Somit kann sich der Sprengring 91 in der Bolzenbauteil-Aufnahme 72 nicht drehen. Der Sprengring 91 kann sich aber auch in der in der Steckaufnahme 81 angeordneten Aufnahmebauteil-Aufnahme 82 nicht drehen, weil auch diese entsprechende Anschlagflächen 76 aufweist. Somit wirkt also das Verbindungselement 90 bzw. der Sprengring 91 in Verbindung mit den Anschlagflächen 76 als Verdrehsicherung.

Allerdings ist eine solche Verdrehsicherung mit einem gewissen Spiel behaftet. Damit sich nämlich der Sprengring 91 beim Aufschieben auf das Bolzenbauteil 70c aufweiten lässt oder beim Einstecken in das Aufnahmebauteil 80c komprimieren lässt, ist ein Abstand zwischen den Anschlagflächen 76 etwas kleiner als ein Umfangsabstand zwischen den Stirnseitenflächen 92. Wenn sich der Sprengring 91 anschließend in seiner Befestigungsstellung B befindet, haben also seine Stirnseitenflächen 92 bezüglich der Anschlagflächen 76 ein gewisses Drehspiel.

Es versteht sich, dass die erfindungsgemäße Verbindungseinrichtung auch bei Lastenträgern zum Auflegen einer Last anwendbar ist, beispielsweise bei solchen, die auf einer Anhängekupplung montierbar sind oder die auch fahrzeugfest sind. Beispielsweise kann man einen solchen Lastenträger in der Art einer Schublade aus dem Heck eines Kraftfahrzeuges ausziehen. Auch dort sind Steckaufnahmen denkbar, in die ein entsprechendes Bolzenbauteil eingreift, beispielsweise zur Realisierung einer Drehwelle oder eines Drehlagers.

## Patentansprüche

1. Verbindungseinrichtung zur Verbindung eines Bolzenbauteils (70a-70c) der Verbindungseinrichtung mit einem Aufnahmebauteil (80a-80d) der Verbindungseinrichtung einer Anhängekupplung (10a; 10b) oder eines Lastenträgers eines Kraftfahrzeugs, wobei das Aufnahmebauteil (80a-80d) eine Steckaufnahme (81) zum Einstecken eines Steckkopfs (71) des Bolzenbauteils (70a-70c) entlang einer Steckachse (100) aufweist, und wobei das Aufnahmebauteil (80a-80d) eine Aufnahmebauteil-Aufnahme (82) und das Bolzenbauteil (70a-70c) eine Bolzenbauteil-Aufnahme (72) für ein Verbindungselement (90) zur zugfesten Verbindung des Aufnahmebauteils (80a-80d) mit dem Bolzenbauteil (70a-70c) bezüglich der Steckachse (100) aufweisen, wobei das Verbindungselement (90) durch einen Sprengring (91) gebildet ist, der in einer Spannstellung (S) einen größeren oder kleineren Außenumfang als in einer gegenüber der Spannstellung (S) entspannteren Befestigungsstellung (B) aufweist, wobei die Bolzenbauteil-Aufnahme (72) und die Aufnahmebauteil-Aufnahme (82) als zu dem Sprengring (91) passende Ringnuten (73, 83) ausgestaltet sind, wobei die Bolzenbauteil-Aufnahme (72) und/oder die Aufnahmebauteil-Aufnahme (82) eine derartige Tiefe (75) aufweisen, wobei der Sprengring (91) in der Spannstellung (S) im wesentlichen nicht vor die jeweilige Aufnahme (72, 82) vorsteht und das Bolzenbauteil (70a-70c) in die Steckaufnahme (81) einsteckbar ist, und wobei der Sprengring (91) in der Befestigungsstellung (B) teilweise in die Bolzenbauteil-Aufnahme (72) und teilweise die Aufnahmebauteil-Aufnahme (82) zur zugfesten Verbindung des Aufnahmebauteils (80a-80d) mit dem Bolzenbauteil (70a-70c) bezüglich der Steckachse (100) eingreift, **dadurch gekennzeichnet, dass** das Aufnahmebauteil (80a-80d) eine Kompressionsschräge (86) oder einen Kompressionskonus (84) zum Komprimieren des Sprengrings (91) beim Einführen in die Steckaufnahme (81) aufweist.

2. Verbindungseinrichtung nach Anspruch 1, **dadurch gekennzeichnet, dass** bezüglich der Steckachse (100) mindestens eine der Ringnuten (73, 83) eine Breite aufweist, die einer Breite des Sprengrings (91) entspricht.

3. Verbindungseinrichtung nach Anspruch 1 oder 2, **dadurch gekennzeichnet, dass** die Aufnahmebauteil-Aufnahme (82) einen geringeren Durchmesser (85) aufweist als der Sprengring (91) in einer vollständig entspannten Stellung und/oder dass der Sprengring (91) in der Befestigungsstellung (B) an einem Boden der Aufnahmebauteil-Aufnahme (82) anliegt.

4. Verbindungseinrichtung nach einem der vorhergehenden Ansprüche, **dadurch gekennzeichnet, dass** das Bolzenbauteil (70a-70c) eine Aufweitschräge (77) oder einen Konus (74) zum Aufweiten des Sprengrings (91) beim Aufstecken auf das Bolzenbauteil (70a-70c) aufweist

5. Verbindungseinrichtung nach Anspruch 4, **dadurch gekennzeichnet, dass** zwischen der Aufweitschräge (77) oder dem Konus (74) und der Aufnahmebauteil-Aufnahme (82) ein Abschnitt ohne Neigung oder mit einer zu der Aufnahmebauteil-Aufnahme (82) hin verlaufenden Neigung angeordnet ist.

6. Verbindungseinrichtung nach einem der vorhergehenden Ansprüche, **dadurch gekennzeichnet, dass** die Kompressionsschräge (86) eine geringere Schrägneigung als die Aufweitschräge (77) aufweist.

7. Verbindungseinrichtung nach einem der vorhergehenden Ansprüche, **dadurch gekennzeichnet, dass** das Bolzenbauteil (70a-70c) und das Aufnahmebauteil (80a-80d) durch das Verbindungselement (90) relativ zueinander zumindest über eine Teilumdrehungsbereich verdrehbar sind.

8. Verbindungseinrichtung nach einem der vorhergehenden Ansprüche, **dadurch gekennzeichnet, dass** sie Drehanschläge (99) verdrehsicheren Befestigen des Bolzenbauteils (70a-70c) am Aufnahmebauteil (80a-80d) und/oder zur Begrenzung einer relativen Verdrehbarkeit des Bolzenbauteils (70a-70c) und des Aufnahmebauteils (80a-80d) umfasst.

9. Verbindungseinrichtung nach Anspruch 8, **dadurch gekennzeichnet, dass** die Drehanschläge Stirnseitenflächen (92) an freien Enden des Sprengrings (91) und quer zur Steckachse (100) verlaufenden Anschlagflächen (76) für die Stirnseitenflächen (92) an der Bolzenbauteil-Aufnahme (72) und/oder der Aufnahmebauteil-Aufnahme (82) umfassen.

10. Verbindungseinrichtung nach Anspruch 8 oder 9, **dadurch gekennzeichnet, dass** an dem Bolzenbauteil (70a-70c) und dem Aufnahmebauteil (80a-80d) mindestens ein Drehmitnahmevorsprung (94) zum Eingriff in eine Drehmitnahmeaufnahme (95) vorgesehen ist.

11. Verbindungseinrichtung nach einem der vorhergehenden Ansprüche, **dadurch gekennzeichnet, dass** die Bolzenbauteil-Aufnahme (72) und/oder die Aufnahmebauteil-Aufnahme (82) teilringförmig oder ringförmig sind.

12. Verbindungseinrichtung nach einem der vorhergehenden Ansprüche, **dadurch gekennzeichnet, dass** das Bolzenbauteil (70a-70c) und das Aufnahmebauteil (80a-80d) Bestandteile einer Verriegelungsanordnung (30a; 30b) zur Verriegelung eines Kupplungsarms einer Anhängekupplung (10a; 10b) bezüglich eines fahrzeugfesten Halters für den Kupplungsarm bilden.

13. Verbindungseinrichtung nach einem der vorhergehenden Ansprüche, **dadurch gekennzeichnet, dass** das Bolzenbauteil (70a-70c) an einem freien Ende eines Stangenteils (32a; 32b, 57, 58) und das Aufnahmebauteil (80a-80d) an einem zum Verdrängen von mindestens einem Verriegelungselement (35) vorgesehenen Verdrängerkopf (33a; 33b) eines Verriegelungsbolzens (31).

14. Verbindungseinrichtung nach einem der vorhergehenden Ansprüche, **dadurch gekennzeichnet, dass** das Bolzenbauteil (70a-70c) an einem freien Ende eines Stangenteils (32a; 32b, 57, 58) und das Aufnahmebauteil (80a-80d) an einem Betätigungsrad, insbesondere einem Handrad (56a; 56b) oder einem Zahnrad (54a; 54b), einer Betätigungseinrichtung (55a; 55b) zur Betätigung der Verriegelungsanordnung (30) vorgesehen sind.

15. Verbindungseinrichtung nach einem der vorhergehenden Ansprüche, **dadurch gekennzeichnet, dass** sie einen Bestandteil eines Lastenträgers oder einer Anhängekupplung (10a; 10b) bildet.

## Claims

1. Connecting device for the connection of a pin element (70a-70c) of the connecting device to a locating element (80a-80d) of the connecting device of a trailer coupling (10a; 10b) or a load carrier of a motor vehicle, wherein the locating element (80a-80d) has a socket (81) for the insertion of an insertion head (71) of the pin element (70a-70c) along an insertion axis (100), and wherein the locating element (80a-80d) has a locating element holder (82) and the pin element (70a-70c) a pin element holder (72) for a connecting element (90) for the tension-resistant connection of the locating element (80a-80d) to the pin element (70a-70c) with reference to the insertion axis (100), wherein the connecting element (90) is formed by a snap ring (91) which in a clamped position (S) has a greater or lesser outer circumference than in a fixing position (B) which is more relaxed than the clamped position (S), wherein the pin element holder (72) and the locating element holder (82) are in the form of annular slots (73, 83) matching the snap ring (91), wherein the pin element holder (72) and/or the locating element holder (82) have or has sufficient depth (75) wherein the snap ring (91) in the clamped position (S) does not substantially protrude beyond the respective holder (72, 82) and the pin element (70a-70c) may be inserted in the socket (81), and wherein the snap ring (91) in the fixing position (B) engages partly in the pin element holder (72) and partly the locating element holder (82) for tension-resistant connection of the locating element (80a-80d) to the pin element (70a-70c) with reference to the insertion axis (100), **characterised in that** the locating element (80a-80d) has a compression bevel (86) or a compression cone (84) for compressing the snap ring (91) on introduction into the socket (81).

2. Connecting device according to claim 1, **characterised in that** with reference to the insertion axis (100) at least one of the annular slots (73, 83) has a width corresponding to a width of the snap ring (91).

3. Connecting device according to claim 1 or 2, **characterised in that** the locating element holder (82) has a smaller diameter (85) than the snap ring (91) in a completely relaxed position and/or that the snap ring (91) in the fixing position (B) fits up against a base of the locating element holder (82).

4. Connecting device according to any of the preceding claims, **characterised in that** the pin element (70a-70c) has a widening bevel (77) or a cone (74) to expand the snap ring (91) during pushing on to the pin element (70a-70c).

5. Connecting device according to claim 4, **characterised in that** between the widening bevel (77) or the cone (74) and the locating element holder (82) there is a section with no slope or with a slope running towards the locating element holder (82).

6. Connecting device according to any of the preceding claims, **characterised in that** the compression bevel (86) has a less inclined slope than the widening bevel (77).

7. Connecting device according to any of the preceding claims, **characterised in that** the pin element (70a-70c) and the locating element (80a-80d) may be rotated relative to one another by the connecting element (90), at least over a partial rotation range.

8. Connecting device according to any of the preceding claims, **characterised in that** it includes rotary stops (99) for twist-proof fastening of the pin element (70a-70c) to the locating element (80a-80d) and/or to limit the relative ability of the pin element (70a-70c) and the locating element (80a-80d) to rotate.

9. Connecting device according to claim 8, **characterised in that** the rotary stops include end face surfaces (92) at free ends of the snap ring (91) and stop faces (76) running at right-angles to the insertion axis (100) for the end face surfaces (92) on the pin element holder (72) and/or the locating element holder (82).

10. Connecting device according to claim 8 or 9, **characterised in that** at least one rotary driving projection (94) for engagement in a rotary driving location (95) is provided on the pin element (70a-70c) and the locating element (80a-80d).

11. Connecting device according to any of the preceding claims, **characterised in that** the pin element holder (72) and/or the locating element holder (82) are partly annular or annular.

12. Connecting device according to any of the preceding claims, **characterised in that** the pin element (70a-70c) and the locating element (80a-80d) form component parts of a locking assembly (30a; 30b) for locking a coupling arm of a trailer coupling (10a; 10b), with reference to a holder for the coupling arm fixed to the vehicle.

13. Connecting device according to any of the preceding claims, **characterised in that** the pin element (70a-70c) is provided at a free end of a rod section (32a; 32b, 57, 58) and the locating element (80a-80d) on a displacing head (33a; 33b) of a locking pin (31) provided for the displacing of one or more locking elements (35).

14. Connecting device according to any of the preceding claims **characterised in that** the pin element (70a-70c) is provided at a free end of a rod section (32a; 32b, 57, 58) and the locating element (80a-80d) on an operating wheel, in particular a hand wheel (56a; 56b) or a gear wheel (54a; 54b), of an operating device (55a; 55b) for actuating the locking assembly (30).

15. Connecting device according to any of the preceding claims, **characterised in that** it is a component part of a load carrier or a trailer coupling (10a; 10b).

## Revendications

1. Dispositif de liaison pour la liaison d'un composant de boulon (70a-70c) du dispositif de liaison avec un composant récepteur (80a-80d) du dispositif de liaison d'un attelage (10a ; 10b) ou d'un support de charge d'un véhicule automobile, le composant récepteur (80a-80d) présentant un logement à emboîtement (81) pour l'emboîtement d'une tête emboîtable (71) du composant de boulon (70a-70c) le long d'un axe d'emboîtement (100), et le composant récepteur (80a-80d) présentant un logement de composant récepteur (82) et le composant de boulon (70a-70c) présentant un logement de composant de boulon (72) pour un élément de liaison (90) pour la liaison fixe en traction du composant récepteur (80a-80d) avec le composant de boulon (70a-70c) par rapport à l'axe d'emboîtement (100), l'élément de liaison (90) étant formé par un circlip (91) qui présente dans une position de serrage (S) une plus grande ou plus petite périphérie extérieure que dans une position de fixation (B) desserrée par rapport à la position de serrage (S), le logement de composant de boulon (72) et le logement de composant récepteur (82) étant configurés comme des rainures annulaires (73, 83) adaptées au circlip (91), le logement de composant de boulon (72) et/ou le logement de composant récepteur (82) présentant une telle profondeur (75), le circlip (91) dans la position de serrage (S) ne dépassant sensiblement pas du logement respectif (72, 82) et le composant de boulon (70a-70c) pouvant être emboîté dans le logement à emboîtement (81), et le circlip (91) s'engageant dans la position de fixation (B) en partie dans le logement de composant de boulon (72) et en partie dans le logement de composant récepteur (82) pour la liaison fixe en traction du composant récepteur (80a-80d) avec le composant de boulon (70a-70c) par rapport à l'axe d'emboîtement (100), **caractérisé en ce que** le composant récepteur (80a-80d) présente un biais de compression (86) ou un cône de compression (84) pour la compression du circlip (91) lors de l'introduction dans le logement à emboîtement (81).

2. Dispositif de liaison selon la revendication 1, **caractérisé en ce qu'**au moins l'une des rainures annulaires (73, 83) présente une largeur qui correspond à une largeur du circlip (91) par rapport à l'axe d'emboîtement (100).

3. Dispositif de liaison selon la revendication 1 ou 2, **caractérisé en ce que** le logement de composant récepteur (82) présente un diamètre plus faible (85) que le circlip (91) dans une position complètement desserrée et/ou **en ce que** le circlip (91) repose dans la position de fixation (B) sur un fond du logement de composant récepteur (82).

4. Dispositif de liaison selon l'une quelconque des revendications précédentes, **caractérisé en ce que** le composant de boulon (70a-70c) présente un biais d'élargissement (77) ou un cône (74) pour l'élargissement du circlip (91) lors de l'emboîtement dans le composant de boulon (70a-70c).

5. Dispositif de liaison selon la revendication 4, **caractérisé en ce qu'**une section sans inclinaison ou avec une inclinaison s'étendant vers le logement de composant récepteur (82) est disposée entre le biais d'élargissement (77) ou le cône (74) et le logement de composant récepteur (82).

6. Dispositif de liaison selon l'une quelconque des revendications précédentes, **caractérisé en ce que** le biais de compression (86) présente une inclinaison en biais plus faible que le biais d'élargissement (77).

7. Dispositif de liaison selon l'une quelconque des revendications précédentes, **caractérisé en ce que** le composant de boulon (70a-70c) et le composant récepteur (80a-80d) peuvent être tournés par l'élément de liaison (90) l'un par rapport à l'autre au moins sur une zone de rotation partielle.

8. Dispositif de liaison selon l'une quelconque des revendications précédentes, **caractérisé en ce qu'**il comporte des butées rotatives (99) pour la fixation antigiratoire du composant de boulon (70a-70c) sur le composant récepteur (80a-80d) et/ou pour la limitation d'une possibilité de rotation relative du composant de boulon (70a-70c) et du composant récepteur (80a-80d).

9. Dispositif de liaison selon la revendication 8, **caractérisé en ce que** les butées rotatives comportent des surfaces latérales avant (92) sur des extrémités libres du circlip (91) et des surfaces de butée (76) s'étendant transversalement à l'axe d'emboîtement (100) pour les surfaces latérales avant (92) sur le logement de composant de boulon (72) et/ou le logement de composant récepteur (82).

10. Dispositif de liaison selon la revendication 8 ou 9, **caractérisé en ce qu'**au moins une saillie d'entraînement en rotation (94) est prévue pour l'engagement dans un logement d'entraînement en rotation (95) sur le composant de boulon (70a-70c) et le composant récepteur (80a-80d).

11. Dispositif de liaison selon l'une quelconque des revendications précédentes, **caractérisé en ce que** le logement de composant de boulon (72) et/ou le logement de composant récepteur (82) sont en forme d'anneau ou d'anneau partiel.

12. Dispositif de liaison selon l'une quelconque des revendications précédentes, **caractérisé en ce que** le composant de boulon (70a-70c) et le composant récepteur (80a-80d) forment des éléments d'un ensemble de verrouillage (30a ; 30b) pour le verrouillage d'un bras d'un attelage (10a ; 10b) par rapport à un support fixé au véhicule pour le bras d'attelage.

13. Dispositif de liaison selon l'une quelconque des revendications précédentes, **caractérisé en ce que** le composant de boulon (70a-70c) est prévu sur une extrémité libre d'une partie de barre (32a ; 32b, 57, 58) et le composant récepteur (80a-80d) est disposé sur une tête déplaceuse (33a ; 33b) prévue pour déplacer au moins un élément de verrouillage (35) d'un boulon de verrouillage (31).

14. Dispositif de liaison selon l'une quelconque des revendications précédentes, **caractérisé en ce que** le composant de boulon (70a-70c) est prévu sur une extrémité libre d'une partie de barre (32a ; 32b, 57, 58) et le composant récepteur (80a-80d) est prévu sur une roue d'actionnement, en particulier un volant (56a ; 56b) ou une roue dentée (54a ; 54b), un dispositif d'actionnement (55a ; 55b) pour l'actionnement de l'ensemble de verrouillage (30).

15. Dispositif de liaison selon l'une quelconque des revendications précédentes, **caractérisé en ce qu'**il forme un élément d'un support de charge ou d'un attelage (10a ; 10b).
